(19) Europäisches Patentamt / European Patent Office / Office européen des brevets

(11) **EP 4 282 504 A1**

(12) **EUROPEAN PATENT APPLICATION**
published in accordance with Art. 153(4) EPC

(43) Date of publication:
**29.11.2023  Bulletin 2023/48**

(51) International Patent Classification (IPC):
*B01D 3/32* (2006.01)          *B01D 3/42* (2006.01)
*C08F 14/06* (2006.01)

(21) Application number: **22742849.7**

(22) Date of filing: **20.01.2022**

(86) International application number:
**PCT/KR2022/001032**

(87) International publication number:
**WO 2022/158873 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.01.2021  KR 20210007838**

(71) Applicant: **Hanwha Solutions Corporation
Jung-gu
Seoul 04541 (KR)**

(72) Inventors:
• **AHAN, Wooyoul**
  **Daejeon 34128 (KR)**
• **LIM, Dongwook**
  **Daejeon 34128 (KR)**
• **LEE, Shinbeom**
  **Daejeon 34128 (KR)**
• **HAN, Keedo**
  **Daejeon 34128 (KR)**

(74) Representative: **Berggren Oy
P.O. Box 16
Eteläinen Rautatiekatu 10A
00101 Helsinki (FI)**

(54) **DISTILLATION APPARATUS**

(57)     The present invention relates to a distillation apparatus and, more particularly, to a distillation apparatus capable of increasing distillation efficiency by smoothly controlling the flow of a fluid inside an apparatus when a vapor phase fruit is supplied to a flowing distillation target material and volatile materials are removed. The distillation apparatus according to the present invention can increase distillation efficiency by smoothly controlling the flow of the fluid inside the apparatus without a separate power source.

FIG. 1

EP 4 282 504 A1

**Description**

[Technical Field]

The present invention relates to a distillation apparatus, and more particularly, to a distillation apparatus capable of increasing distillation efficiency by smoothly adjusting flow of a fluid inside the apparatus when volatile materials are removed by supplying a gaseous heat medium to a flowing material to be distilled.

[Background Art]

PVC is generally produced by suspension polymerization, emulsion polymerization, or bulk polymerization, but PVC is usually produced by suspension polymerization and emulsion polymerization having advantages in that heat of reaction may be easily removed and high-purity products may be obtained.

In the suspension polymerization and emulsion polymerization, in general, vinyl chloride monomer (VCM) and a polymerization initiator together with an aqueous medium, a dispersant, and an emulsifier are introduced into a polymerization vessel equipped with a stirrer and stirred, and the temperature inside the polymerization vessel is maintained to polymerize VCM.

At this time, generally, the polymerization reaction does not continue until VCM is entirely converted into PVC, and ends at a polymerization conversion rate with high production efficiency. After completion, residual monomers in the polymerization vessel are separated from PVC slurry through a removal device and then collected.

In order to remove the VCM formed during the polymerization reaction, a cone-shaped spinning cone column (SCC) in which a retention time of a raw product is improved by installing cones in multiple stages has been preferred as a removal device of the related art. However, as the VCM is removed through distillation, there is a problem in that foam occurs by gas-liquid contact. Thus, the occurrence of foam is suppressed by widening a stage interval, but the speed of the liquid in the removal device, such as a PVC slurry, which is a material to be distilled, and the gaseous heat medium supplying thermal energy, is too slow, so a distillation time takes too long and production efficiency is lowered.

Therefore, in Korea Patent No. 10-1474411 entitled "SCC having foam remover," a separate device for removing foam that occurs is installed, but the installation and operation costs are expensive as foam is removed using a pressure difference through a vacuum, which leads to difficulty in practically using the technique industrially.

[Disclosure]

[Technical Problem]

An object of the present invention is to provide a distillation apparatus capable of increasing distillation efficiency by smoothly adjusting flow of fluid inside the apparatus.

[Technical Solution]

In one general aspect, a distillation apparatus includes: a housing having an accommodation space; a rotating shaft located in the accommodation space of the housing and rotated by a driving unit; a supply unit supplying a material to be distilled to an upper portion of the accommodation space; a heat medium supply unit supplying a gaseous heat medium to a lower portion of the accommodation space; a plurality of rotating cones spaced apart from each other along the rotating shaft, rotating about the rotating shaft, having a cone shape with an open upper portion, and having an inner diameter decreasing from top to bottom; a fixed cone located on an inner surface of the housing, spaced apart from the rotating cone, having a cone shape with open upper and lower portions, having an inner diameter decreasing from top to bottom, and located below each rotating cone; a fluid adjusting disk located on the rotating shaft between the rotating cone and the fixed cone and adjusting a flow of the heat medium; a discharge unit located in an upper portion of the housing and discharging a removal target separated from the material to be distilled; and a collecting unit provided in a lower portion of the housing and collecting a material to be distilled from which the removal target was removed from the material to be distilled.

In the distillation apparatus according to an exemplary embodiment of the present invention, based on the rotating shaft, the fluid adjusting disk may be located to be closer to the fixed cone than the rotating cone but located to satisfy the following Relational Expression.

[Relational Expression]

$$(L_1 - L_2)/10 \leq L_{disk} \leq (L_1 - L_2)/2$$

(In the relational expression, $(L_1 - L_2)$ is a distance from a first reference point $L_1$ of the rotating shaft where a lower end of the rotating cone is located to a second reference point $L_2$ of the rotating shaft perpendicular to a lower end of the fixed cone, and $L_{disk}$ is a distance from the second reference point $L_2$ of the fixed cone to the rotating shaft where the fluid adjusting disk is located.)

In the distillation apparatus according to an exemplary embodiment of the present invention, the ratio of an open area formed by the open lower portion of the fixed cone to an area occupied by the fluid adjusting disk protruding vertically from the rotating shaft may be 1: 0.3 to 1.3.

In the distillation apparatus according to an exemplary embodiment of the present invention, the fluid adjusting disk may include a vertical portion protruding vertically from the rotating shaft and an extension portion inclined to extend downwardly from the vertical portion.

In the distillation apparatus according to an exemplary embodiment of the present invention, a distance between an end portion of the extension portion and the fixed cone may be 0.1 to 0.5 m.

In the distillation apparatus according to an exemplary embodiment of the present invention, a distance between the rotating cones adjacent to each other may be 0.8 to 1.5 m.

In the distillation apparatus according to an exemplary embodiment of the present invention, an inner surface of the rotating cone may have an inclination of 30 to 60° with respect to the rotating shaft.

In the distillation apparatus according to an exemplary embodiment of the present invention, the rotating shaft may be rotated at 50 to 120 rpm by the driving unit.

In another general aspect, a distillation method through a distillation apparatus of the present invention includes: supplying the material to be distilled to the housing; supplying the gaseous heat medium to the material to be distilled to produce the removal target including the volatile material and a material to be distilled from which the removal target was removed; and removing the removal target and the material to be distilled from which the removal target was removed from the housing.

In the distillation method according to an exemplary embodiment of the present invention, the material to be distilled may include a polymerization product of suspension polymerization or emulsion polymerization.

In the distillation method according to an exemplary embodiment of the present invention, the material to be distilled may include distillable vinyl chloride monomer (VCM).

[Advantageous Effects]

The distillation apparatus according to the present invention may increase the distillation efficiency by smoothly adjusting flow of a fluid inside the apparatus without a separate power source.

[BRIEF DESCRIPTION OF THE DRAWINGS]

FIG. 1 is a schematic diagram illustrating a partially cut front of a distillation apparatus according to an embodiment of the present invention;

FIG. 2 is a perspective view illustrating a main portion of the distillation apparatus shown in FIG. 1;

FIG. 3 is a schematic diagram illustrating a main portion by modeling a partially cut front of the distillation apparatus shown in FIG. 1; and

FIG. 4 is a schematic diagram illustrating a main portion by modeling a partially cut front of a distillation apparatus according to another embodiment of the present invention.

[Best Mode]

Technical terms and scientific terms used herein have the general meaning understood by those skilled in the art to which the present invention pertains unless otherwise defined, and a description for the known function and configuration obscuring the present invention will be omitted in the following description and the accompanying drawings.

In addition, a singular form used in the present specification may be intended to also include a plural form, unless otherwise indicated in the context.

In addition, units used in the present specification without particular mention are based on weights, and as an example, a unit of % or ratio refers to a wt% or a weight ratio, and the wt% refers to a wt% of any one component in a total composition occupied in the composition, unless otherwise defined.

In addition, a numerical range used in the present specification includes all values within the range including the lower limit and the upper limit, increments logically derived in a form and span in a defined range, all double limited values, and all possible combinations of the upper limit and the lower limit in the numerical range defined in different forms. Unless otherwise defined in the specification of the present disclosure, values which may be outside a numerical range due to experimental error or rounding of a value are also included in the defined numerical range.

The term "comprise" in the present specification is an open-ended description having a meaning equivalent to the expression such as "provided," "include," "have," or "is/are characterized," and does not exclude elements, materials or processes which are not further listed.

In the distillation apparatus of the related art, a cone-shaped spinning cone column (SCC) in which a retention time of a raw product is improved by installing cones in multiple stages is preferred, but during distillation, foam occurs due to gas-liquid contact, causing problems in stability and yield of a material to be distilled. Thus, the occurrence of foam is suppressed by widening a stage interval, but the speed of fluid in the distillation apparatus is too slow, so a distillation time takes too long and the distillation efficiency is deteriorated.

In contrast, a distillation apparatus of the present invention includes a fluid adjusting disk capable of smoothly controlling flow of a fluid inside the distillation apparatus, and thus, when a gaseous heat medium is supplied to a material to be distilled to remove a removal target including a volatile material, the formation of foam may be suppressed without a foam removing device requiring a separate driving source, a distillation time may be shortened by accelerating the flow of the fluid, and distillation efficiency may be improved by increasing a removal rate of the removal target to be removed.

Hereinafter, the distillation apparatus according to an embodiment of the present invention will be described in detail with reference to the accompanying drawings. The accompanying drawings are provided by way of example in order to sufficiently convey the technical spirit of the present invention to those skilled in the art, and the present invention is not limited to the drawings presented below and may be embodied in other forms.

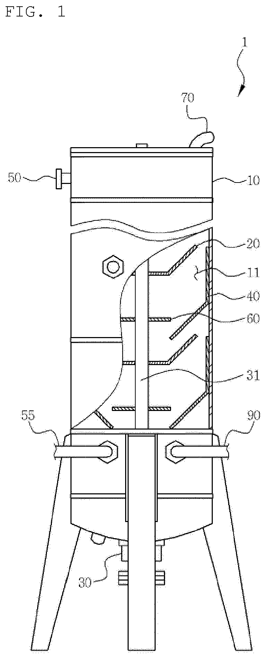

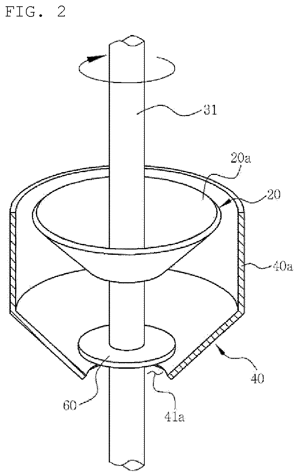

Referring to FIGS. 1 to 3, a distillation apparatus 1 of the present invention includes a housing 10 having an accommodation space 11; a rotating shaft 31 located in the accommodation space 11 of the housing 10 and rotated by a driving unit 30; a supply unit 50 supplying a material to be distilled to an upper portion of the accommodation space 11; a heat medium supply unit 55 supplying a gaseous heat medium to a lower portion of the accommodation space 11; a plurality of rotating cones 20 spaced apart from each other along the rotating shaft 31, rotating about the rotating shaft 31, having a cone shape with an open upper portion, and having an inner diameter decreasing from top to bottom; a fixed cone 40 located on an inner surface of the housing 10, spaced apart from the rotating cone 20, having a cone shape with open upper and lower portions, having an inner diameter decreasing from top to bottom, and located below each rotating cone 20; a fluid adjusting disk 60 located on the rotating shaft 31 between the rotating cone 20 and the fixed cone 40 and adjusting a flow velocity of the heat medium in the housing 10; a discharge unit located in an upper portion of the housing 10 and discharging a removal target separated from the material to be distilled; and a collecting unit provided in a lower portion of the housing 10 and collecting a material to be distilled from which the removal target was removed from the material to be distilled.

In the present invention, the material to be distilled (A) refers to a form in which a residual solvent and distillable monomers exist inside polymer powder obtained from suspension polymerization and emulsion polymerization. For example, the material to be distilled (A) may refer to suspension polymer (PVC slurry) including distillable VCM therein after suspension-polymerizing PVC. For example, PVC is described as suspension polymerization or emulsion polymerization, but the present invention is not limited thereto.

In addition, in the present invention, a gaseous heat medium (B) is for vaporization of residual monomers and residual solvents, and may be gas or vapor, specifically, water vapor (steam).

The housing 10 provides the accommodation space 11 for supplying the gaseous heat medium to the material to be distilled accommodated therein. As shown in the drawing, the housing 10 may be provided as a cylindrical chamber, but the accommodation space 11 is not limited in shape as long as it has a structure for forming the accommodation space 11. The housing 10 may be installed to have a longitudinal direction in a direction perpendicular to the ground, and accommodates the rotating shaft 31 therein.

The rotating shaft 31 serves to rotate the rotating cone 20 to be described below and is located in the internal accommodation space 11 of the housing 10 and is rotated by the driving unit 30. The rotating shaft 31 extends in a direction parallel to a longitudinal direction of the accommodation space 11 and may be located at the center of the accommodation space 11. The driving unit 30 for driving the rotating shaft 31 may include a motor as a driving source, and as shown in the drawing, the driving unit 30 may be installed on a lower surface of the housing 10 to rotate the rotating shaft 31 connected thereto.

The rotating shaft 31 may be rotated at various speeds by the driving unit 30 according to the type of material to be distilled. For example, the rotating shaft 31 may be rotated at 50 to 120 rpm, specifically, at 60 to 100 rpm, when the material to be distilled is PVC slurry. At the speed within the above range, the PVC slurry may be smoothly transferred to the lower rotating cone 20 by centrifugal force.

The supply unit 50 is for supplying the material to be distilled into the housing 10, and may be a pipe provided in the upper portion of the housing 10 and through which the material to be distilled may be supplied, but the present invention is not limited thereto and the supply unit 50 may include all conventional supply units capable of supplying the material to be distilled into the housing 10. The material to be distilled may be supplied into the housing 10 through the supply unit 50 provided in the upper portion of the housing 10, and as the material to be distilled is supplied to the accommodation space 11 of the housing 10 by the supply unit 50, the material to be distilled may be moved from top to bottom with a flow velocity by gravity.

The heat medium supply unit 55 supplies the gaseous heat medium for transferring thermal energy to the material to be distilled supplied to the accommodation space 11 of the housing 10, and may include a pipe or tube into which the gaseous heat medium is introduced, but the present invention is not limited thereto and the heat medium supply unit 55 may include all conventional supply units capable of supplying a gaseous heat medium into the housing 10. The heat medium supply unit 55 may be provided in the lower portion of the housing 10 opposite to an inflow direction of the material to be distilled. As the heat medium supply unit 55 is provided in the lower portion, the gaseous heat medium may be moved upwardly from the lower portion of the accommodation space 11 of the housing 10.

The discharge unit is provided in the upper portion of the housing 10, and serves to discharge a separated removal target as a liquid material to be distilled and the gaseous heat medium are in contact with each other in the accommodation space 11 of the housing 10. The discharge unit may also be provided as a pipe or tube, but is not limited thereto. In a specific example, the removal target discharged through the discharge unit includes a volatile material, and as a specific example, the removal target may be a residual solvent or a distillable monomer included in the material to be distilled, but is not limited thereto.

The collecting unit is provided in the lower portion of the housing 10 and may include a pipe or tube for collecting the material to be distilled from which the removal target was removed from the material to be distilled, but is not limited thereto. As a non-limiting example, the material to be distilled from which the removal target was removed discharged through the collecting unit may be high-purity PVC without a residual solvent and distillable monomers.

The plurality of rotating cones 20 are spaced apart from each other along the rotating shaft 31 and rotate about the rotating shaft 31, have a cone shape with an open upper portion, and have an inner diameter decreasing from top to bottom. That is, as shown in the drawing, the rotating cone 20 has a V-shaped cone shape as a whole, but a lower end having the smallest inner diameter is formed to form a bottom surface perpendicular to the rotating shaft 31.

In one aspect of the present invention, a distance between the rotating cones 20 adjacent to each other may be 0.8 to 1.5 m, specifically, 1 to 1.4 m, but is not limited thereto. However, the formation of foam may be prevented within the above range, and a transfer speed based on a head of the material to be distilled (A) may be relatively fast. In addition, as the inner diameter of the rotating cone 20 decreases from top to bottom, an inner surface 20a of the rotating cone 20 may have an inclined surface inclined at a predetermined angle with respect to the rotating shaft 31. Specifically, the inner surface of the rotating cone 20 with respect to the rotating shaft 31 may have an inclination of 30 to 60°, more specifically, an inclination of 40 to 50°. When the inner surface 20a is inclined within the above range, the material to be distilled may be easily transferred upwardly along the inner surface 20a of the rotating cone 20 by centrifugal force.

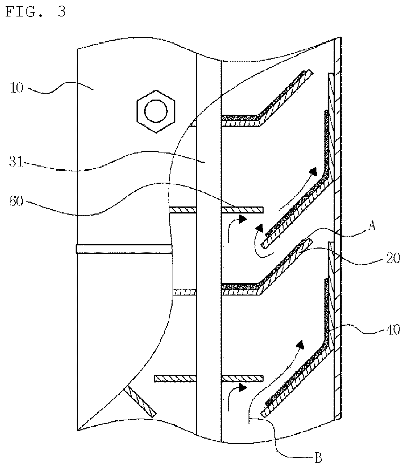

Referring to FIG. 3, the material to be distilled (A) transferred from the upper portion of the housing 10 to the rotating cone 20 may be moved to the bottom surface of the rotating cone 20 by gravity, may be transferred upwardly along the inclined inner surface of the rotating cone 20 by the centrifugal force of the rotating cone 20, may be transferred toward an inner wall of the housing 10, may be again transferred by gravity to the fixed cone 40 to be described below, and may be transferred to the rotating cone 20 located in a lower portion.

The fixed cone 40 is for providing a path for moving the material to be distilled from the rotating cone 20 located above to the rotating cone 20 located below, is located on the inner surface of the housing 10 at a distance from the rotating cone 20, has a cone shape with open upper and lower portions, has an inner diameter decreasing from top to bottom, and is located below each rotating cone 20. That is, the fixed cone 40 may have a tubular shape with open upper and lower portions, but may have a V-shape as a whole. As shown in the drawing, the fixed cone 40 may have a fixed portion 40a extending along a wall so as to be fixable to an inner wall (inner surface) of the housing 10, but unlike that shown in the drawing, the fixed cone 40 may be fixed by conventional fixing means such as fitting grooves and fitting protrusions that may be fixed to the inner wall of the housing 10.

As the fixed cones 40 are provided below the plurality of rotating cones 20, respectively, the rotating cones 20 and the fixed cones 40 may be alternately located in a height direction of the housing 10.

The fixed cone 40 may be spaced apart from the rotating cone 20 and may be formed in a shape surrounding the outside of the rotating cone 20. Specifically, the maximum diameter of the fixed cone 40 may be larger than the maximum diameter of the rotating cone 20. Accordingly, the fixed cone 40 may receive the material to be distilled A from the rotating cone 20.

That is, when the material to be distilled (A) is located in the rotating cone 20, the material to be distilled (A) may be spread in the form of a thin film along an inner wall of the rotating cone 20 by centrifugal force and transferred to an upper portion, and then transferred to the fixed cone 40 over the inner wall of the housing 10.

The fluid adjusting disk 60 may be located on the rotating shaft 31 between the rotating cone 20 and the fixed cone 40 to accelerate the flow velocity of the heat medium within the housing 10. As shown in the drawing, the fluid adjusting disk 60 is formed to protrude by a predetermined length from the rotating shaft 31, and may be provided in the form of a disk through which the rotating shaft 31 passes. Such a fluid adjusting disk 60 not only increases the flow velocity of the gaseous heat medium B, but also increases a contact area between gas and liquid, thereby exhibiting high distillation efficiency in a short time. Specifically, as the fluid adjusting disk 60 is located between the rotating cone 20 and the fixed cone 40 located therebelow, the gaseous heat medium flowing from the lower rotating cone 20 to the fixed cone 40 located thereabove may be transferred toward an inner surface of the fixed cone 40 without being dispersed to the upper rotating cone 20. Accordingly, as the flow velocity increases and most of the heat medium is transferred to the inner surface of the fixed cone 40, the gas-liquid contact area may be remarkably increased, enabling efficient distillation compared to a supply amount of heat medium.

Preferably, the fluid adjusting disk 60 is located closer to the fixed cone 40 than the rotating cone 20 based on the rotating shaft 31, but may be located to satisfy the following relational expression.

[Relational Expression]

$$(L_1-L_2)/10 \leq L_{disk} \leq (L_1-L_2)/2$$

(In the relational expression, $(L_1-L_2)$ is a distance from a first reference point $L_1$ of the rotating shaft 31 where a lower end of the rotating cone 20 is located to a second reference point $L_2$ of the rotating shaft 31 perpendicular to a lower end of the fixed cone 40, and $L_{disk}$ is a distance from the second reference point $L_2$ of the fixed cone 40 to the rotating shaft 31 where the fluid adjusting disk 60 is located.)

When the fluid adjusting disk 60 is located in a position satisfying the above relational expression, the flow velocity may be accelerated without disturbing the flow of the material to be distilled (A) flowing from the top to the bottom.

The fluid adjusting disk 60 is not limited in size as long as it does not interfere with the flow of the material to be distilled, and may be formed to protrude from the rotating shaft 31. However, the flow velocity acceleration efficiency against the area is excellent when the ratio of the open area formed by the open lower portion of the fixed cone 40 to an area occupied by the fluid adjusting disk 60 protruding vertically from the rotating shaft 31 is 1: 0.3 to 1.3, specifically, 1: 0.5 to 1.

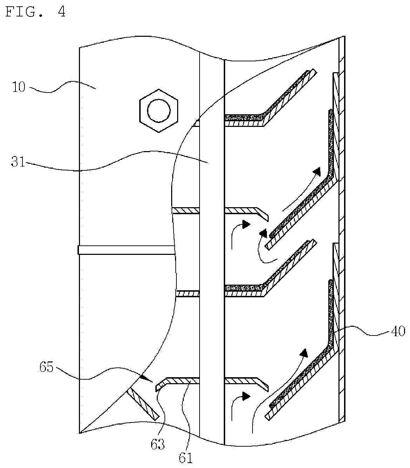

FIG. 4 shows a fluid adjusting disk 65 according to another embodiment.

Referring to FIG. 4, the fluid adjusting disk 65 of the present invention may include a vertical portion 61 protruding vertically from the rotating shaft and an extension portion 63 inclined downwardly from the vertical portion. Compared to the fluid adjusting disk 60 shown in FIGS. 1 to 3, the fluid adjusting disk 65 further includes the extension portion 63 having an end bent downwardly, which further induce the heat medium (A) dispersed upwardly toward the material to be distilled, without contacting the material to be distilled flowing on the inner surface of the fixed cone 40, thereby further increasing the gas-liquid contact efficiency.

An extended length of the extension portion 65 is not limited as long as it does not obstruct the flow of the material to be distilled (A) flowing on the inner surface of the fixed cone 40. In one specific example, a distance between an end portion of the extension portion and the fixed cone 40 may be 0.05 to 0.8 m, specifically, 0.1 to 0.5 m, but is not limited thereto.

In addition, a distillation method of the present invention using the distillation apparatus described above may include introducing the material to be distilled into the housing, supplying a gaseous heat medium to the material to be distilled to generate a removal target including a volatile material and the material to be distilled from which the removal target was removed, and removing the removal target and the material to be distilled from which the removal target was removed from the housing.

In the present invention, the material to be distilled may include a polymerization product of suspension polymerization or emulsion polymerization, and in detail, may include a suspension polymerization product or emulsion polymerization product of PVC. Examples of polymerizable monomers that may react with VCM for polymerization may include, but are not limited to, carboxylic acid ester of vinyl alcohol (e.g., vinyl acetate), vinyl ether (e.g., alkylvinyl ether), unsaturated carboxylic acid ester (e.g., acrylate and methacrylate), vinylidene halide (e.g., vinylidene chloride and vinylidene fluoride), unsaturated nitrile (e.g., acrylonitrile), and olefin (e.g., ethylene and propylene).

In the present invention, the material to be distilled may preferably refer to a liquid dispersion (PVC slurry) including PVC that has undergone a polymerization reaction, unreacted residual monomers (VCM), and an aqueous medium including mainly water, and may include a small amount of a dispersing agent, such as polyvinyl alcohol or hydroxypropylmethyl cellulose, in addition to a buffer, a particle size control agent, a scale adhesion inhibitor, an antifoaming agent, and the like, if necessary.

Specifically, in the operation of introducing the material to be distilled into the housing, a slurry concentration of the material to be distilled, that is, a concentration of the PVC slurry, is preferably 5 to 50 wt%, more preferably 10 to 40 wt%. When the concentration of the material to be distilled exceeds 50 wt%, fluidity may be significantly reduced, and when the concentration is less than 5 wt%, the removal efficiency of residual monomers may be significantly reduced.

In the operation in which a gaseous heat medium is supplied to the material to be distilled to produce a removal target including a volatile material and a material to be distilled from which the removal target was removed are produced, the gaseous heat medium may be water vapor and an ejection amount of water vapor may be preferably 1 to 100 kg/h, more preferably, 5 to 50 kg/h per 1 cubic meter of the area formed by the material to be distilled, but is not limited thereto. At this time, the temperature and the ejection amount of the gas may be adjusted so that the temperature of the material to be distilled flowing on the uppermost rotating cone is 50 to 150 °C, specifically 70 to 120 °C, more specifically 80 to 110 °C, but is not limited thereto.

In the operation of removing the removal target and the material to be distilled from which the removal target was removed from the housing, the removal target is discharged through the discharge unit, and the material to be distilled from which the removal target was removed is discharged to the collecting unit. The material to be distilled from which the removal target was removed may be high-purity PVC from which VCM was removed. As such, the distillation method through the distillation apparatus described above has excellent process efficiency and may produce a high-purity product.

Hereinafter, the present invention will be described in more detail through examples. However, the following examples are only one reference for explaining the present invention in detail, but the present invention is not limited thereto and may be implemented in various forms.

In addition, unless otherwise defined, all the technical terms and scientific terms have the same meaning as those generally understood by a person skilled in the art. Terms used in the present disclosure are used to merely effectively describe specific examples, without intending to limit the present invention. In addition, the unit of additives not specifically described in the specification may be wt%.

<Example 1>

As a material to be distilled, PVC paste resin (solid contents 45 w%) was supplied to the distillation apparatus shown in FIGS. 1 to 3, and steam of 120 °C was injected from the bottom at 0.03m$^3$/h. A diameter of the fluid adjusting disk was 0.6 m, $L_{disk}$ was 0.22 m, an inclination angle of the inner surface of the rotating cone was 45°, and a distance between adjacent rotating cones was 1.2 m. Thereafter, a relative speed of steam compared to a speed of the material to be distilled transferred along the inner surface of the fixed cone was measured and shown in Table 1 below.

<Example 2>

Distillation was performed in the same manner as that of Example 1, except that the distillation apparatus in which the $L_{disk}$ of the fluid adjusting disk was 0.08 m.

<Example 3>

Distillation was performed in the same manner as that of Example 1, except that the distillation apparatus shown in FIG. 4 was used. At this time, the diameter of the fluid adjusting disk was 0.69 m, and the $L_{disk}$ was 0.22 m.

<Comparative Example 1>

Distillation was performed in the same manner as that of Example 1, except that the distillation apparatus without a fluid adjusting disk was used.

[Table 1]

| Classification | Comparativ e Example | Example 1 | Example 2 | Example 3 |
|---|---|---|---|---|
| Steam velocity(m/sec) | 0.474 | 0.511 | 1.049 | 0.688 |

Referring to Table 1, in the case of Examples 1, 2, and 3, it was confirmed that the relative velocity (steam velocity (m/sec) at near FC liquid film) of the steam and material to be distilled in the fixed cone (FC) was faster. Through Makarytchev's equation ($k_G$ (m/sec) $\propto 0.023\Delta U^{0.83}$), it can be seen that the mass transfer coefficient ($k_G$) increases by 1.1 times, 1.9 times, and 1.4 times, respectively. Accordingly, it was confirmed that distillation may be performed with excellent efficiency in a relatively short time. Although the present disclosure has been described by limited exemplary embodiments and drawings, the present disclosure is not limited to the exemplary embodiments described above and various modifications and changes may be made by a person having an ordinary skill in the art to which the present disclosure pertains, from the descriptions above.

Therefore, the spirit of the present disclosure is defined only by the appended claims, and encompasses all modifications and equivalents that fall within the scope of the appended claims.

**Claims**

1. A distillation apparatus comprising:

   a housing having an accommodation space;
   a rotating shaft located in the accommodation space of the housing and rotated by a driving unit;
   a supply unit supplying a material to be distilled to an upper portion of the accommodation space;
   a heat medium supply unit supplying a gaseous heat medium to a lower portion of the accommodation space;
   a plurality of rotating cones spaced apart from each other along the rotating shaft, rotating about the rotating shaft, having a cone shape with an open upper portion, and having an inner diameter decreasing from top to bottom;
   a fixed cone located on an inner surface of the housing, spaced apart from the rotating cone, having a cone shape with open upper and lower portions, having an inner diameter decreasing from top to bottom, and located below each rotating cone;
   a fluid adjusting disk located on the rotating shaft between the rotating cone and the fixed cone and adjusting a flow of the heat medium;
   a discharge unit located in an upper portion of the housing and discharging a removal target separated from the material to be distilled; and
   a collecting unit provided in a lower portion of the housing and collecting a material to be distilled from which the removal target was removed from the material to be distilled.

2. The distillation apparatus of claim 1, wherein,

   based on the rotating shaft, the fluid adjusting disk is located to be closer to the fixed cone than the rotating cone but located to satisfy the following Relational Expression.

   $$[Relational\ Expression]$$

   $$(L_1 - L_2)/10 \leq L_{disk} \leq (L_1 - L_2)/2$$

   (In the relational expression, ($L_1 - L_2$) is a distance from a first reference point $L_1$ of the rotating shaft where a lower end of the rotating cone is located to a second reference point $L_2$ of the rotating shaft perpendicular to a lower end of the fixed cone, and $L_{disk}$ is a distance from the second reference point $L_2$ of the fixed cone to the rotating shaft where the fluid adjusting disk is located.)

3. The distillation apparatus of claim 1, wherein the ratio of an open area formed by the open lower portion of the fixed cone to an area occupied by the fluid adjusting disk protruding vertically from the rotating shaft is 1: 0.3 to 1.3.

4. The distillation apparatus of claim 1, wherein the fluid adjusting disk includes a vertical portion protruding vertically from the rotating shaft and an extension portion inclined to extend downwardly from the vertical portion.

5. The distillation apparatus of claim 4, wherein a distance between an end portion of the extension portion and the fixed cone is 0.1 to 0.5 m.

6. The distillation apparatus of claim 1, wherein a distance between the rotating cones adjacent to each other is 0.8 to 1.5 m.

7. The distillation apparatus of claim 1, wherein an inner surface of the rotating cone has an inclination of 30 to 60° with respect to the rotating shaft.

8. The distillation apparatus of claim 1, wherein the rotating shaft is rotated at 50 to 120 rpm by the driving unit.

9. A distillation method through the distillation apparatus of any one of claims 1 to 8, the distillation method comprising:

supplying the material to be distilled to the housing;
supplying the gaseous heat medium to the material to be distilled to produce the removal target including the volatile material and the material to be distilled from which the removal target was removed; and
removing the removal target and the material to be distilled from which the removal target was removed from the housing.

10. The distillation method of claim 9, wherein the material to be distilled includes a polymerization product of suspension polymerization or emulsion polymerization.

11. The distillation method of claim 10, wherein the material to be distilled includes distillable vinyl chloride monomer (VCM).

FIG. 1

FIG. 2

FIG. 3

FIG. 4

## INTERNATIONAL SEARCH REPORT

| | International application No. |
|---|---|
| | **PCT/KR2022/001032** |

### A. CLASSIFICATION OF SUBJECT MATTER

**B01D 3/32**(2006.01)i; **B01D 3/42**(2006.01)i; **C08F 14/06**(2006.01)i

According to International Patent Classification (IPC) or to both national classification and IPC

### B. FIELDS SEARCHED

Minimum documentation searched (classification system followed by classification symbols)

B01D 3/32(2006.01); B01D 3/30(2006.01); B01D 3/38(2006.01); B01J 19/18(2006.01); B01J 4/00(2006.01); C07B 63/00(2006.01); C08F 14/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 증류(distillation), 하우징(housing), 회전콘(spinning cone), 고정콘(fixed cone), 유체조절디스크(fluid control disk)

### C. DOCUMENTS CONSIDERED TO BE RELEVANT

| Category* | Citation of document, with indication, where appropriate, of the relevant passages | Relevant to claim No. |
|---|---|---|
| A | KR 10-2012-0132422 A (LG CHEM, LTD.) 05 December 2012 (2012-12-05)<br>See claims 1, 6, 10 and 11. | 1-11 |
| A | KR 10-2018-0075814 A (HANWHA CHEMICAL CORPORATION) 05 July 2018 (2018-07-05)<br>See claims 1, 3 and 7. | 1-11 |
| A | JP 2005-313100 A (SAKAMOTO KORYO CO., LTD.) 10 November 2005 (2005-11-10)<br>See claims 1-4. | 1-11 |
| A | US 2003-0233939 A1 (SZEPESSY, Stefan et al.) 25 December 2003 (2003-12-25)<br>See claims 1-4. | 1-11 |
| A | KR 10-0359391 B1 (CHISSO CORPORATION) 24 January 2003 (2003-01-24)<br>See claims 1-3. | 1-11 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 April 2022** | **29 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/001032**

| Patent document cited in search report | | | Publication date (day/month/year) | Patent family member(s) | | | Publication date (day/month/year) |
|---|---|---|---|---|---|---|---|
| KR | 10-2012-0132422 | A | 05 December 2012 | CN | 103561859 | A | 05 February 2014 |
| | | | | CN | 103561859 | B | 05 August 2015 |
| | | | | EP | 2716356 | A2 | 09 April 2014 |
| | | | | EP | 2716356 | B1 | 26 December 2018 |
| | | | | JP | 2014-515416 | A | 30 June 2014 |
| | | | | JP | 5699249 | B2 | 08 April 2015 |
| | | | | KR | 10-1491780 | B1 | 11 February 2015 |
| | | | | US | 2014-0066580 | A1 | 06 March 2014 |
| | | | | US | 9018346 | B2 | 28 April 2015 |
| | | | | WO | 2012-165817 | A2 | 06 December 2012 |
| | | | | WO | 2012-165817 | A3 | 28 March 2013 |
| KR | 10-2018-0075814 | A | 05 July 2018 | CN | 110121381 | A | 13 August 2019 |
| | | | | CN | 110121381 | B | 28 December 2021 |
| | | | | US | 0981081 | B2 | 20 April 2021 |
| | | | | US | 2019-0321746 | A1 | 24 October 2019 |
| | | | | WO | 2018-124558 | A1 | 05 July 2018 |
| JP | 2005-313100 | A | 10 November 2005 | JP | 4258009 | B2 | 30 April 2009 |
| US | 2003-0233939 | A1 | 25 December 2003 | AT | 448390 | T | 15 November 2009 |
| | | | | AU | 2003-228191 | A1 | 06 January 2004 |
| | | | | BR | 0312019 | A | 22 March 2005 |
| | | | | BR | 0312019 | B1 | 12 June 2012 |
| | | | | CN | 1671952 | A | 21 September 2005 |
| | | | | CN | 1671952 | B | 10 November 2010 |
| | | | | CN | 1671952 | C | 21 September 2005 |
| | | | | EP | 1532352 | A1 | 25 May 2005 |
| | | | | EP | 1532352 | B1 | 11 November 2009 |
| | | | | EP | 1532352 | B2 | 01 February 2017 |
| | | | | JP | 2005-530947 | A | 13 October 2005 |
| | | | | JP | 4555077 | B2 | 29 September 2010 |
| | | | | KR | 10-0943780 | B1 | 23 February 2010 |
| | | | | KR | 10-2005-0026415 | A | 15 March 2005 |
| | | | | RU | 2005101419 | A | 27 June 2005 |
| | | | | RU | 2315872 | C2 | 27 January 2008 |
| | | | | US | 6755896 | B2 | 29 June 2004 |
| | | | | WO | 04-001201 | A1 | 31 December 2003 |
| KR | 10-0359391 | B1 | 24 January 2003 | CA | 2141989 | A1 | 08 August 1995 |
| | | | | CN | 1112938 | A | 06 December 1995 |
| | | | | CN | 1112938 | C | 06 December 1995 |
| | | | | DE | 69507058 | T2 | 05 August 1999 |
| | | | | EP | 0668134 | A2 | 23 August 1995 |
| | | | | EP | 0668134 | B1 | 07 January 1999 |
| | | | | ES | 2127991 | T3 | 01 May 1999 |
| | | | | GR | 3029394 | T3 | 28 May 1999 |
| | | | | JP | 07-224109 | A | 22 August 1995 |
| | | | | JP | 3709568 | B2 | 26 October 2005 |
| | | | | KR | 10-1995-0032318 | A | 20 December 1995 |
| | | | | MY | 115335 | A | 31 May 2003 |
| | | | | SG | 55065 | A1 | 21 December 1998 |
| | | | | TW | 297820 | B | 11 February 1997 |
| | | | | US | 6375793 | B1 | 23 April 2002 |

Form PCT/ISA/210 (patent family annex) (July 2019)

INTERNATIONAL SEARCH REPORT
Information on patent family members

International application No.

**PCT/KR2022/001032**

| Patent document cited in search report | Publication date (day/month/year) | Patent family member(s) | Publication date (day/month/year) |
|---|---|---|---|
| | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101474411